# EUROPEAN PATENT SPECIFICATION

(11) **EP 3 640 007 B1**
(45) Date of publication and mention of the grant of the patent: **27.12.2023**
(21) Application number: 18201330.0
(22) Date of filing: 18.10.2018
(51) Int. Cl.: B29C 64/165, B29C 64/153, B29C 64/268, B29C 64/393, B22F 10/14, B22F 10/28, B22F 10/366, B33Y 50/02, B33Y 30/00

(54) **METHOD FOR ADDITIVELY MANUFACTURING AT LEAST ONE THREE-DIMENSIONAL OBJECT**
VERFAHREN ZUR GENERATIVEN FERTIGUNG VON MINDESTENS EINEM DREIDIMENSIONALEN OBJEKT
PROCÉDÉ DE FABRICATION ADDITIVE D'AU MOINS UN OBJET TRIDIMENSIONNEL

(43) Date of publication of application: 22.04.2020
(73) Proprietor: Concept Laser GmbH, 96215 Lichtenfels (DE)
(72) Inventor: Werner, Jürgen, 96215 Lichtenfels (DE)
(74) Representative: Hafner & Kohl PartmbB

(56) References cited:
- EP-A1- 3 318 352
- DE-A1-102011 087 374
- DE-A1-102017 107 364

## Description

The invention relates to a method for additively manufacturing at least one three-dimensional object by means of successive layerwise selective irradiation and consolidation of build material layers, whereby each build material layer which is selectively irradiated and consolidated comprises at least one irradiation area which is irradiated and consolidated by means of at least one energy beam.

Respective methods for additively manufacturing at least one three-dimensional object, which may be implemented as selective electron beam melting processes or selective laser melting processes, for instance, are known from the technical field of additive manufacturing.

It is also known that the amount of thermal energy input into respective irradiation areas by the at least one energy beam and particularly, the distribution of thermal energy input into respective irradiation areas by the at least one energy beam is related with the structural properties, i.e. particularly the mechanical properties, of the three-dimensional object which is to be additively manufactured.

In this context, it has been observed that known irradiation approaches or irradiation strategies, respectively may lead to an undesired accumulation of thermal energy (heat) in outer regions of respective irradiation areas, i.e. in regions or respective irradiation areas which build or comprise a border with non-consolidated build material areas in a respective build material layer, which accumulation of thermal energy may negatively affect the structural properties of the three-dimensional object which is to be additively manufactured.

The control of the amount of thermal energy input into respective irradiation areas is thus, an important factor for obtaining three-dimensional objects of desired structural properties. DE 102017107364 A1 discloses a method for additively manufacturing at least one three dimensional object according to the preamble of claim 1.

In view of the above, there exists a need for further developing of methods for additively manufacturing three-dimensional objects with respect to the control of thermal input into respective irradiation areas and improved structural properties of the three-dimensional objects which are manufacturable with the method.

It is the object of the invention to provide a method for additively manufacturing at least one three-dimensional object allowing for a control of thermal input into respective irradiation areas improved structural properties of the at least one three-dimensional object manufacturable with the method.

This object is achieved by the subject-matter of the independent Claims. The Claims depending on the independent Claims relate to possible embodiments of the subject-matters of the independent Claims.

An aspect of the present invention refers to a method for additively manufacturing at least one three-dimensional object ("object") by means of successive layerwise selective irradiation and consolidation of build material layers, i.e. layers of a build material, which can be consolidated by means of being irradiated with at least one energy beam. The build material may be provided as a powder, for instance. The build material may be or comprise a ceramic, a polymer, or a metal, for instance. The energy beam may be an electron beam or a laser beam, for instance. The build material layers which are to be selectively irradiated and consolidated may be successively applied in a build plane of an apparatus for additively manufacturing at least one object which is used for performing the method. The method may be implemented as a selective laser sintering method, a selective laser melting method, or a selective electron beam melting method, for instance. Yet, it is also conceivable that the method is a binder jetting method, particularly a metal binder jetting method, for instance.

The method is performable or performed by an apparatus for additively manufacturing at least one object ("additive manufacturing apparatus"). The additive manufacturing apparatus for performing the method may be embodied as a selective laser sintering apparatus, a selective laser melting apparatus, or a selective electron beam melting apparatus, for instance. Yet, it is also conceivable that the additive manufacturing apparatus for performing the method is embodied as a binder jetting apparatus, particularly a metal binder jetting apparatus, for instance.

According to the method, each build material layer which is to be selectively irradiated and consolidated comprises at least one irradiation area which is to be irradiated and consolidated by means of at least one energy beam. A respective irradiation area typically, corresponds to the or a cross-section of a respective object, which is to be additively manufactured, in the respective build material layer.

A respective irradiation area is typically irradiated on basis of an irradiation pattern comprising a number of irradiation vectors, e.g. scan vectors, in a specific arrangement relative to each other. The irradiation vectors typically define the path of the at least one energy beam across the respective irradiation area. The irradiation pattern is typically the same for each irradiation area. Yet, irradiating different irradiation areas and/or different build material layers with different irradiation patterns is also conceivable.

A respective irradiation pattern may comprise a plurality of irradiation pattern elements which may be deemed or denoted as islands. Each irradiation pattern element comprises a number of irradiation vectors in in a specific arrangement relative to each other. Respective irradiation pattern elements are typically distributed across a respective irradiation area in a specific arrangement relative to each other. Respective irradiation pattern elements may be arranged in a regular arrangement, such as chessboard-or a checkerboard arrangement, for instance, or in an irregular arrangement. Each irradiation pattern element may have a specific shape, specific dimensions and a specific orientation. Hence, each irradiation pattern element may define a specific sub-area of a respective irradiation area. Merely as an example, a respective irradiation pattern element may have the shape of a rectangle, particularly the shape of a square. Typically, all irradiation pattern elements of a respective irradiation area have the same basic shape, the same dimensions, and the same orientation. Yet, irradiation pattern elements of a specific irradiation area having different basic shapes and/or dimensions and/or orientation are conceivable as well.

Respective irradiation pattern elements are separately irradiatable or irradiated with the at least one energy beam. Hence, each irradiation pattern element may be separately irradiated with the at least one energy beam, whereby the at least one energy beam is guided across the respective irradiation pattern element in a certain path defined by irradiation vectors, e.g. scan vectors, of the respective irradiation pattern element.

As is apparent from above, a respective irradiation pattern may be a stripe-pattern, a chessboard-or checkerboard-pattern, or an island pattern, for instance. Yet, other irradiation patterns are conceivable as well.

In at least one build material layer, at least one irradiation area typically comprises at least one first sub-area having a first heat conductance capability defined by its orientation and/or position relative to non-consolidated build material areas (directly) adjacent to the irradiation area, particularly contacting or surrounding, respectively the irradiation area, and at least one second sub-area having a second heat conductance capability higher than the first heat conductance capability of the first sub-area defined by its orientation and/or position relative to non-consolidated build material areas (directly) adjacent to the irradiation area, particularly contacting or surrounding, respectively the irradiation area. In other words, a respective irradiation area typically comprises sub-areas having different heat conductance capabilities, i.e. particularly different thermal conductivities, i.e. sub-areas of low(er) heat conductance capability herein denoted a first sub-areas and sub-areas of high(er) heat conductance capability herein denoted as second sub-areas. The respective heat conductance capabilities of the respective sub-areas by defined by the orientation and/or position of the respective sub-areas relative to non-consolidated build material areas (directly) adjacent to the irradiation area, particularly contacting or surrounding, respectively the irradiation area. Hence, the term "heat conductance capability" does not refer to a basic material property of the build material, but to the (bulk) property of a respective sub-area, particularly when it is consolidated, to conduct heat from the respective sub-area towards other areas, i.e. particularly other sub-areas, of a respective build material layer. The heat conductance capability of a respective sub-area may be determined, e.g. calculated, on basis of experimental data, for instance before the actual sub-area is irradiated and consolidated. Typically, the first sub-areas also have a low(er) capability of heat conductance, i.e. particularly a low(er) capability of heat dissipation, compared with the second sub-areas. As will be apparent from below, the heat conductance capability and thermal conductance, respectively of respective sub-areas is essentially defined by the amount of non-consolidated build material (directly) contacting and/or surrounding the respective sub-area in the respective build material layer.

According to the method, for at least one irradiation area of at least one build material layer which is to be selectively irradiated and consolidated, respective first sub-areas are irradiated before respective second sub-areas. In other words, respective second sub-areas are irradiated after the first sub-areas have been irradiated. Hence, a respective irradiation area is first irradiated in the one or more first sub-area(s) having a comparatively low heat conductance capability and thermal energy conductance and then irradiated in the one or more second sub-area(s) having a comparatively high heat conductance capability and thermal energy conductance.

Hence, the method implements a specific order of energy beam irradiation processing and a specific order of irradiating respective first and second sub-areas of a respective irradiation area having sub-areas of different heat conductance capabilities and conductances according to which the sub-area(s) having a comparatively low heat conductance capability and conductance (first sub-areas) are irradiated before sub-area(s) having a comparatively high heat conductance capability and conductance (second sub-areas).

As indicated above, a respective irradiation area is typically irradiated on basis of an irradiation pattern comprising a plurality of irradiation vectors, e.g. scan vectors. Hence, irradiation vectors or sections of irradiation vectors extending in a respective first sub-area are typically irradiated before irradiation vectors or sections of irradiation vectors extending in a respective second sub-area. According to the invention, an irradiation vector which comprises at least one section extending in a first sub-area and at least one section extending in a second sub-area, the section(s) which extend(s) in the first sub-area(s) will be processed and irradiated before the section(s) which extend(s) in the second sub-area(s) in accordance with the method.

In such a manner, undesired accumulations of thermal energy (heat) particularly in respective first sub-areas can be reduced or avoided, particularly since the order of irradiation allows for that respective first sub-areas may dissipate thermal energy input during irradiation into other regions having a higher heat conductance capability and conductance, i.e. particularly in respective second sub-areas. As mentioned above, respective undesired accumulations of thermal energy may negatively affect the structural properties of the object which is to be additively manufactured. Hence, reducing or avoiding undesired accumulations of thermal energy in accordance with the method described herein is a measure to improve the structural properties of the object manufacturable with the method.

The thermal energy input into the at least one irradiation area by the at least one energy beam may be directed from the one or more first sub-areas towards the one or more second sub-areas, particularly such that the thermal energy input into the at least one irradiation area is directed from the one or more first sub-area towards the center or a center region of the respective irradiation area. In either case, undesired accumulations of thermal energy can be reduced or avoided. The center of a respective irradiation area may be defined by the geometric center of the irradiation area or the center of gravity of the object in the respective build material layer, for instance. Hence, the thermal energy input into the at least one irradiation area by the at least one energy beam may be directed from outer regions of the respective irradiation area (as will be apparent from below, respective outer regions may also be denoted as border regions herein as they typically build or comprise a border with non-consolidated build material at least in the respective build material layer) towards inner or center regions of the respective irradiation area (as will be apparent from below, respective inner regions may also be denoted as non-border regions herein as they typically do not build or comprise a border with non-consolidated build material at least in the respective build material layer).

At least one first sub-area may be at least partially, particularly completely, located above an (already) non-irradiated and non-consolidated irradiation area of a preceding build material layer and/or a at least one second sub-area may be at least partially, particularly completely, located above an (already) irradiated and consolidated build material area of a preceding build material layer. Hence, the differences of the heat conductance capability of first and second sub-areas may originate from the contact area of the respective sub-area with non-consolidated build material which typically has a low(er) heat conductance capability and conductance and consolidated build material which typically has a high(er) heat conductance capability and conductance. Hence, when a respective sub-area comprises a high number of contact areas with non-consolidated build material in a preceding build material layer, the heat conductance capability of the respective sub-area will be typically lower than when the respective sub-area comprises less contact areas with non-consolidated build material in a preceding build material layer. As such, a respective first sub-area may have a larger contact area with non-consolidated build material in a preceding build material layer, whereas a respective second sub-area may have a smaller contact area with non-consolidated build material in the preceding build material layer. Conversely, a respective first sub-area may have a smaller contact area with consolidated build material in a preceding build material layer, whereas a respective second sub-area may have a larger contact area with consolidated build material in the preceding build material layer.

A respective first sub-area may be or comprise an overhang region of the object, particularly in the respective build material layer. A respective overhang region is typically a region located above at least one non-consolidated build material area of a preceding build material layer.

As indicated above, the at least one first sub-area may be built by or may comprise a border region of a respective irradiation area with respect to a non-consolidated build material area at least partially adjacent to or surrounding the respective irradiation area in a respective build material layer and the at least one second sub-area may be built by or may comprise a non-border region of the respective irradiation area with respect to the non-consolidated build material area at least partially adjacent to or surrounding the at least one irradiation area in the respective build material layer. As such, one or more respective border regions of a respective irradiation area may be irradiated before one or more respective non-border regions of the respective irradiation area. This irradiation order also results or contributes in reducing or avoiding undesired accumulation of thermal energy. The width of a respective border region may be a few millimeters. As such, a respective border region may represent a relatively narrow area, particularly a narrow strip-like area, of a respective irradiation area.

A respective irradiation area may comprise at least two irradiation area segments which are separately irradiatable or irradiated with the at least one energy beam. Thereby, each irradiation area segment may comprise at least one first sub-area having a first heat conductance capability and at least one second sub-area having a second thermal conductivity higher than the first heat conductance capability. In accordance with the method, a respective first sub-area of a respective irradiation area segment may be irradiated before a respective second sub-area of the respective irradiation area segment. Likewise, irradiation area segments having a higher number of first sub-areas may be irradiated before irradiation area segments having a lower number of first sub-areas in at least one irradiation area. These irradiation orders also result or contribute in reducing or avoiding undesired accumulation of thermal energy.

A respective first sub-area of the irradiation area or a respective irradiation area segment may at least partially, particularly completely, surround a respective second sub-area of the irradiation area or a respective irradiation area segment, respectively.

As indicated above, a respective irradiation area may be irradiated on basis of an irradiation pattern comprising a plurality of irradiation vectors. As such, at least one pattern parameter of an irradiation pattern used for irradiating a first build material layer which is to be selectively irradiated and consolidated may be changed with respect to at least one pattern parameter of a second irradiation pattern used for irradiating a second build material layer. This approach may also result or contribute in reducing or avoiding undesired accumulation of thermal energy. This approach may also result or contribute in reducing or avoiding undesired accumulation of thermal energy.

Another aspect of the invention refers to a hardware- and/or software-embodied control unit for an apparatus for additively manufacturing at least one object by means of successive layerwise selective irradiation and consolidation of build material layers, whereby each build material layer comprises at least one irradiation area which is to be irradiated and consolidated by means of at least one energy beam, whereby the at least one irradiation area comprises at least one first sub-area having a first heat conductance capability and at least one second sub-area having a second heat conductance capability higher than the first heat conductance capability. The control unit is configured to control the successive layerwise selective irradiation and consolidation of respective irradiation areas or irradiation area segments, respectively in accordance with the method as described herein. As such, the control unit is particularly configured to move the at least one energy beam across the at least one irradiation area such that respective first sub-areas are irradiated before respective second sub-areas.

Another aspect of the invention refers to an apparatus for additively manufacturing at least one object by means of successive layerwise selective irradiation and consolidation of build material layers, whereby each build material layer comprises at least one irradiation area which is to be irradiated and consolidated by means of at least one energy beam. The apparatus comprises or is connected with a control unit as described herein.

The apparatus can be embodied as a selective laser sintering apparatus, a selective laser melting apparatus, or a selective electron beam melting apparatus, for instance. Yet, it is also conceivable that the apparatus is embodied as a binder jetting apparatus, particularly a metal binder jetting apparatus, for instance.

The apparatus comprises a number of functional and/or structural units which are operable or operated during its operation. Each functional and/or structural unit may comprise a number of functional and/or structural sub-units. Exemplary functional and/or structural units are a build material application unit which is configured to apply an amount of build material which is to be selectively irradiated and consolidated in a build plane of the apparatus so as to form a build material layer which is to be selectively irradiated and consolidated in the build plane, an irradiation unit which is configured to selectively irradiate and thereby, consolidate build material layers, particularly respective irradiation areas, with at least one energy beam, and a respective control unit.

All annotations regarding the method also apply to the control unit and/or the apparatus.

Exemplary embodiments of the invention are described with reference to the Fig., whereby:
- Fig. 1: shows a principle drawing of an apparatus for additively manufacturing of three-dimensional objects according to an exemplary embodiment in a side-view; and
- Fig. 2-5: each show a principle drawing of a build material layer which is to be selectively irradiated and consolidated in accordance with a method according to an exemplary embodiment in a top-view; and
- Fig. 6: shows a principle drawing of a three-dimensional object during the additive manufacturing process.

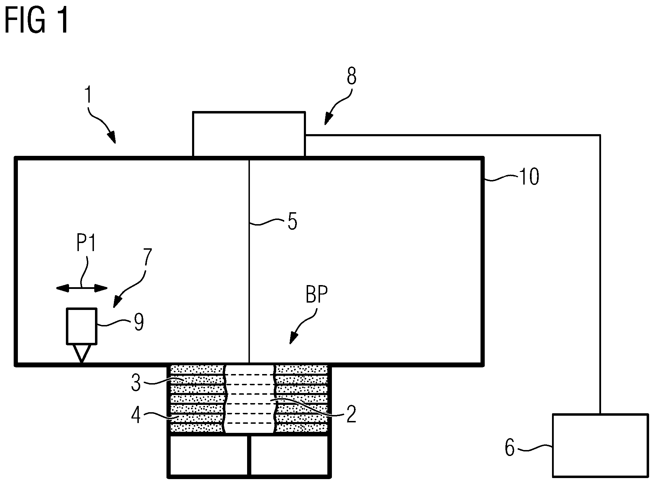

Fig. 1 shows a principle drawing of an exemplary embodiment of an apparatus 1 for additively manufacturing three-dimensional objects 2, e.g. technical components, by means of successive layerwise selective irradiation and accompanying consolidation of build material layers 3 of a powdered build material 4, e.g. a metal powder, which can be consolidated by means of at least one energy beam 5 according to an exemplary embodiment. The energy beam 5 may be an electron beam or a laser beam, for instance. The apparatus 1 may be embodied as a selective electron beam melting apparatus or as a selective laser melting apparatus, for instance.

The apparatus 1 comprises a number of functional and/or structural units which are operable and operated during its operation. Each functional and/or structural unit may comprise a number of functional and/or structural sub-units. Operation of the functional and/or structural units and the apparatus 1, respectively is controlled by a hard- and/or software embodied (central) control unit 6.

Exemplary functional and/or structural units of the apparatus 1 are a build material application unit 7, an irradiation unit 8, and the control unit 6. Further functional and/or structural units of the apparatus 1 may be provided even though not depicted in the Fig.

The build material application unit 7 is configured to apply an amount of build material 4 in the build plane BP of the apparatus 1 so as to successively generate respective build material layers 3 which are to be selectively irradiated and consolidated during additively manufacturing a object 2. The build material application unit 7 may comprise a build material application element 9 which may be embodied as a blade-like re-coating element, for instance. The build material application element 9 may be moveably supported within the process chamber 10 of the apparatus 1; the build material application element 9 may particularly be moved across the build plane BP so as to apply an amount of build material 4 in the build plane BP so as to generate a respective build material layer 3 which is to be selectively irradiated and consolidated during additively manufacturing a object 2. An exemplary motion of the build material application element 9 across the build plane BP is indicated by double-arrow P1. A drive unit (not shown) may be assigned to the build material application unit 7 so as to generate a drive force for moving the build material application element 9 across the build plane BP.

The irradiation unit 8 is configured to selectively irradiate and thereby, consolidate respective build material layers 3 which have been applied in the build plane BP of the apparatus 1 by means of the build material application unit 7 with at least one energy beam 5. The irradiation unit 8 may at least comprise a beam generating unit (not shown) configured to generate the at least one energy beam 5. The irradiation unit 8 may further comprise a beam deflecting unit (not shown), e.g. a scanning unit, configured to deflect the at least one energy beam 5 to diverse positions within the build plane BP.

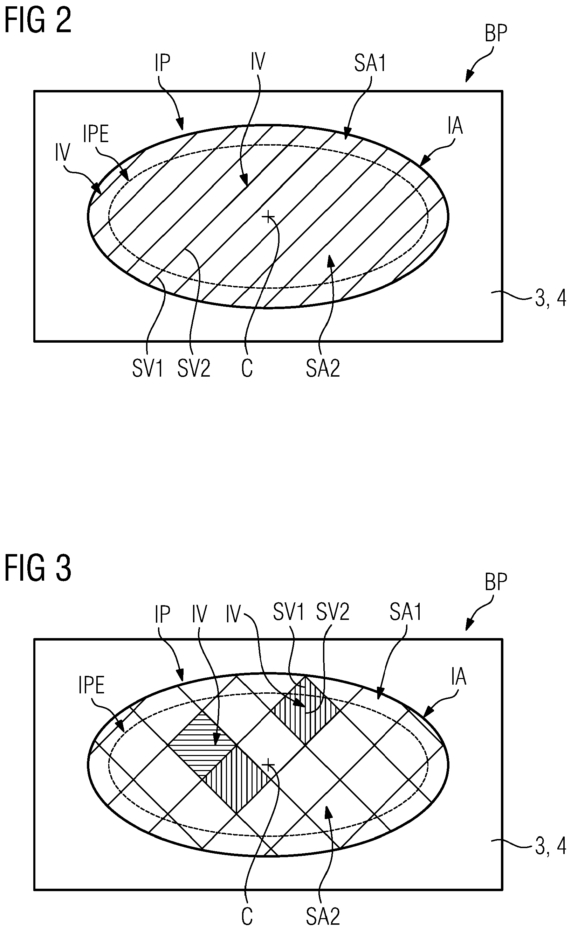

The control unit 6 is configured to implement a method for additively manufacturing an object 2 according to exemplary embodiments which will be explained in more detail in context with Fig. 2-6.

According to exemplary embodiments of the method, each build material layer 3 which is to be selectively irradiated and consolidated comprises at least one irradiation area IA which is to be irradiated and consolidated by means of the energy beam 5 or at least on energy beam 5, respectively. A respective irradiation area IA is irradiated on basis of an irradiation pattern IP comprising a number of irradiation pattern elements IPE defined by irradiation vectors IV, e.g. scan vectors, in a specific arrangement relative to each other. The irradiation vectors IV define the path of the at least one energy beam 5 across the irradiation area IA.

Fig. 2 shows an exemplary embodiment in which a respective irradiation pattern MP may comprise a plurality of stripe-like shaped irradiation pattern elements IPE arranged in a specific parallel arrangement relative to each other. The irradiation pattern elements IPE are exemplarily arranged in a parallel arrangement.

Fig. 3 shows an exemplary embodiment in which a respective irradiation pattern MP may comprise a plurality of rectangular shaped irradiation pattern elements IPE - which may also may be denoted as "islands" - arranged in a specific parallel arrangement relative to each other. The irradiation pattern elements IPE are exemplary arranged so as to form checkerboard pattern.

Generally, i.e. particularly independent from the irradiation pattern elements IPE exemplarily shown in Fig. 2, 3, respective irradiation pattern elements IPE are separately irradiatable or irradiated with at least one energy beam 5 independent of their size, shape, position and orientation. Hence, each irradiation pattern element IPE may be separately irradiated with an energy beam 5, whereby the energy beam 5 is guided across the respective irradiation pattern element IPE in a certain path defined by the irradiation vectors IV of the respective irradiation pattern element IPE.

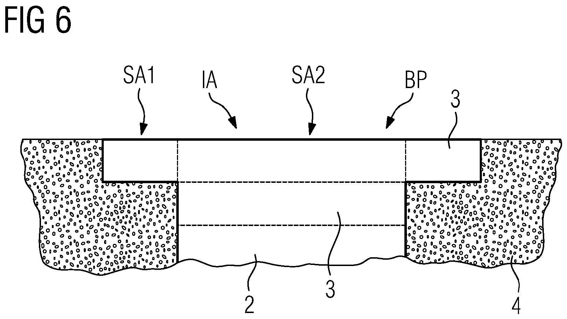

According to the method, an irradiation area IA comprises at least one first sub-area SA1 having a first heat conductance capability defined by its orientation and/or position relative to non-consolidated build material areas adjacent to the irradiation area IA, particularly surrounding the irradiation area IA, and at least one second sub-area SA2 having a second heat conductance capability higher than the first heat conductance capability of the first sub-area SA1 defined by its orientation and/or position relative to non-consolidated build material areas adjacent to the irradiation area IA, particularly surrounding the irradiation area IA. In other words, the irradiation area IA comprises sub-areas SA1, SA2 having different heat conductance capabilities, i.e. at least one sub-area SA1 of low(er) heat conductance capability and at least one second sub-area SA2 of high(er) heat conductance capability. Typically, the first sub-areas SA1 also have a low(er) capability of heat conductance, i.e. particularly a low(er) capability of heat dissipation, compared with the second sub-areas SA2. As is apparent from the exemplary embodiment of Fig. 6, respective first sub-areas SA1 may be overhang sections of the object 2 which is to be additively manufactured, for instance.

According to the method, respective first sub-areas SA1 are irradiated before respective second sub-areas SA2. Thus, respective second sub-areas SA2 are irradiated after the first sub-areas SA1 have been (completely) irradiated. Hence, a respective irradiation area IA is first irradiated in the one or more first sub-area(s) SA1 having a comparatively low heat conductance capability and thermal energy conductance and then irradiated in the one or more second sub-area(s) SA2 having a comparatively high heat conductance capability and thermal energy conductance.

Hence, the method implements a specific order of energy beam irradiation processing and a specific order of irradiating respective first and second sub-areas SA1, SA2 of a respective irradiation area IA having sub-areas SA1, SA2 of different heat conductance capabilities and conductances according to which the first sub-area(s) SA1 having a comparatively low heat conductance capability and conductance are irradiated before the second sub-area(s) SA2 having a comparatively high heat conductance capability and conductance.

Hence, irradiation vectors IV or sections SV1, SV2 of irradiation vectors extending in a respective first sub-area SA1 are irradiated before irradiation vectors IV or sections SV1, SV2 of irradiation vectors extending in a respective second sub-area SA2. As is exemplarily apparent from Fig. 2, 3, an irradiation vector IV may comprise at least one section SV1 extending in a first sub-area SA1 and at least one section SV2 extending in a second sub-area SA2, the section(s) SV1 which extend(s) in the first sub-area(s) SA1 will be processed and irradiated before the section(s) SV2 which extend(s) in the second sub-area(s) SA2 in accordance with the method.

In such a manner, the method allows for that undesired accumulations of thermal energy (heat) particularly in respective first sub-areas SA1 can be reduced or avoided, particularly since the order of irradiation allows for that respective first sub-areas SA1 may dissipate thermal energy input during irradiation into other regions having a higher heat conductance capability and conductance, i.e. particularly in respective second sub-areas SA2. Hence, reducing or avoiding undesired accumulations of thermal energy in accordance with the method is a measure to improve the structural properties of the object 2 manufacturable with the method.

The thermal energy input into the at least one irradiation area IA by the energy beam 5 may thus, be directed from the one or more first sub-areas SA1 towards the one or more second sub-areas SA2, particularly such that the thermal energy input into an irradiation area IA is directed from the one or more first sub-area SA1 towards the center C or a center region of the respective irradiation area IA. In either case, undesired accumulations of thermal energy can be reduced or avoided. As is apparent from the Fig., the center C of a respective irradiation area IA may be defined by the geometric center of the irradiation area IA or the center of gravity of the object 2 in the respective build material layer 3. Hence, the thermal energy input into the irradiation IA area by the energy beam 5 may be directed from outer regions of the irradiation area IA towards inner or center regions of the irradiation area IA.

As is apparent from the Fig., a first sub-area SA1 may be built by or may comprise an outer region, which may also be deemed or denoted as a border region of a respective irradiation area IA with respect to a non-consolidated build material area adjacent to or surrounding the irradiation area IA and a second sub-area SA2 may be built by or may comprise an inner region, which may also be deemed or denoted as a non-border region of the respective irradiation area IA with respect to the non-consolidated build material area at least partially adjacent to or surrounding the irradiation area IA. As such, respective border regions which typically coincide with respective first sub-areas SA1 of a respective irradiation area IA may be irradiated before respective non-border regions which typically coincide with respective second sub-areas SA2 of the respective irradiation area IA. This irradiation order also results or contributes in reducing or avoiding undesired accumulation of thermal energy. The width of a respective border region may be a few millimeters. As such, a respective border region may represent a relatively narrow area, particularly a narrow strip-like area, of a respective irradiation area IA.

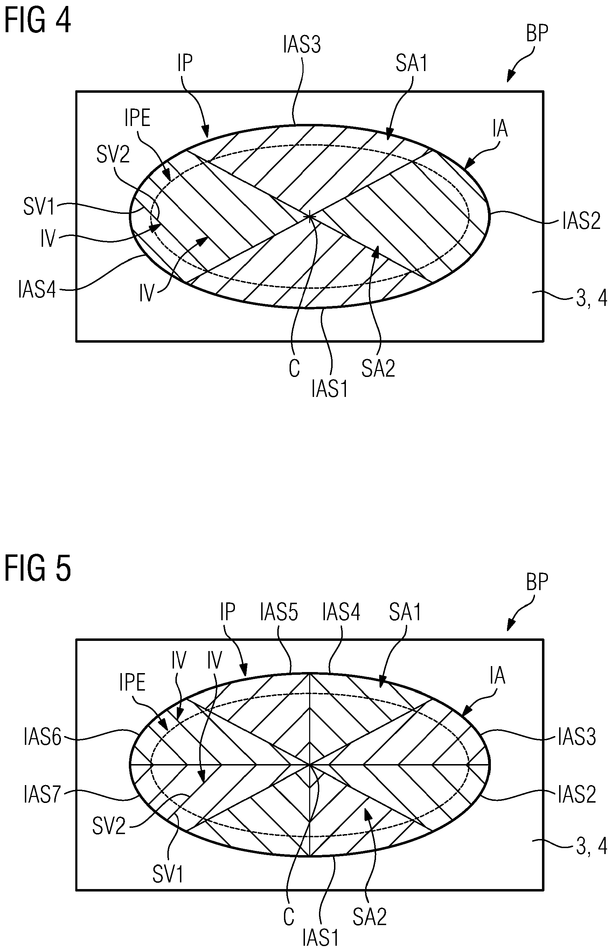

As is exemplarily apparent from Fig. 4, 5, an irradiation area IA may comprise a plurality of irradiation area segments IAS1 - IAS8 which are separately irradiatable or irradiated with an energy beam 5. The exemplary embodiment of Fig. 4 exemplarily shows an irradiation area IA comprising four irradiation area segments IAS1 - IAS4, the exemplary embodiment of Fig. 5 exemplarily shows an irradiation area IA comprising eight irradiation area segments IAS1 - IAS8. Of course, other numbers of irradiation area segments IAS are conceivable.

Thereby, each irradiation area segment IAS1 - IAS8may comprise at least one first sub-area SA1 having a first heat conductance capability and at least one second sub-area SA2 having a second heat conductance capability higher than the first heat conductance capability. In accordance with the method, a respective first sub-area SA1 of a respective irradiation area segment IAS1 - IAS8 is irradiated before a respective second sub-area SA2 of the respective irradiation area segment IAS1 - IAS8. Likewise, irradiation area segments IAS1 - IAS8 having a higher number of first sub-areas SA2 may be irradiated before irradiation area segments IAS1 - IAS8 having a lower number of first sub-areas SA1 in an irradiation area.

As is exemplarily apparent from the view of Fig. 6, a first sub-area SA1 may be located above an (already) non-irradiated and non-consolidated irradiation area of a preceding build material layer 3 and a second sub-area SA2 may be located above an (already) irradiated and consolidated build material area of a preceding build material layer 3. Hence, the differences of the heat conductance capability of first and second sub-areas SA1, SA2 may originate from the contact area of the respective sub-area SA1, SA2 with non-consolidated build material 4 which typically has a low(er) heat conductance capability and conductance and consolidated build material 4 which typically has a high(er) heat conductance capability and conductance. Hence, when a respective sub-area SA1, SA2 comprises a high number of contact areas with non-consolidated build material 4 in a preceding build material layer 3, the heat conductance capability of the respective sub-area SA1, SA2 will be typically lower than when the respective sub-area SA1, SA2 comprises less contact areas with non-consolidated build material 4 in a preceding build material layer 3. As such, a respective first sub-area SA1 may have a larger contact area with non-consolidated build material in a preceding build material layer 3, whereas a respective second sub-area SA2 may have a smaller contact area with non-consolidated build material in the preceding build material layer 3. Conversely, a respective first sub-area SA1 may have a smaller contact area with consolidated build material 4 in a preceding build material layer 3, whereas a respective second sub-area SA2 may have a larger contact area with consolidated build material 4 in the preceding build material layer 4.

As is further apparent from Fig. 6, respective first sub-area SA1 may be or comprise an overhang region of the object 2 in the respective build material layer 3. A respective overhang region is a region located above at least one non-consolidated build material area of a preceding build material layer 3.

As is apparent from Fig. 2-6, a respective first sub-area SA1 may at least partially, particularly completely, surround a respective second sub-area SA2 of an IA.

In either case, at least one pattern parameter, in particular the orientation of at least one irradiation vector IV, of a respective irradiation pattern IP may be changed for irradiating different build material layers 3. As such, at least one pattern parameter of an irradiation pattern used for irradiating a first build material layer 3 which is to be selectively irradiated and consolidated may be changed with respect to at least one pattern parameter of a second irradiation pattern used for irradiating a second build material layer 3. This approach may also result or contribute in reducing or avoiding undesired accumulation of thermal energy.

## Claims

1. Method for additively manufacturing at least one three-dimensional object (2) by means of successive layerwise selective irradiation and consolidation of build material layers (3), whereby
each build material layer (3) which is selectively irradiated and consolidated comprises at least one irradiation area (IA) which is irradiated and consolidated by means of at least one energy beam (5), wherein
the irradiation area (IA) comprises at least one first sub-area (SA1) having a first heat conductance capability defined by its orientation and/or position relative to non-consolidated build material areas adjacent to the irradiation area (IA) and at least one second sub-area (SA2) having a second heat conductance capability higher than the first heat conductance capability of the first sub-area (SA1) defined by its orientation and/or position relative to non-consolidated build material areas adjacent to the irradiation area (IA), whereby
for at least one irradiation area of at least one build material layer (3) which is to be selectively irradiated and consolidated a respective first sub-area (SA1) is irradiated before a respective second sub-area (SA2), **characterized in that** the at least one irradiation area (IA) is irradiated on basis of an irradiation pattern (IP) comprising a plurality of irradiation vectors (IV), whereby for an irradiation vector (IV) which comprises at least one section extending in a respective first sub-area (SA1) and at least one section (IV2) extending in a second sub-area (SA2), the at least one section (IV) which extends in the first sub-area (SA1) is processed and irradiated before the at least one section (IV2) which extends in the second sub-area (SA2).

2. Method according to Claim 1, **wherein** the thermal energy input into the at least one irradiation area (IA) by the at least one energy beam (5) is directed from the at least one first sub-area (SA1) towards the at least one second sub-area (SA2), particularly such that the thermal energy input into the at least one irradiation area (IA) is directed from the at least one first sub-area (SA1) towards the center (C) or a center region of the at least one irradiation area (IA).

3. Method according to Claim 1 or 2, **wherein** the at least one first sub-area (SA1) is at least partially, particularly completely, located above a non-irradiated and non-consolidated irradiation area of a preceding build material layer (3) and/or the at least one second sub-area (SA2) is at least partially, particularly completely, located above an irradiated and consolidated build material area of a preceding build material layer (3).

4. Method according to Claim 3, **wherein** the at least one first sub-area (SA1) is or comprises an overhang region of the three-dimensional object (2) which is to be additively manufactured.

5. Method according to any of the preceding Claims, **wherein** the at least one first sub-area (SA1) is built by or comprises a border region of the at least one irradiation area (IA) with respect to a non-consolidated build material area at least partially adjacent to the at least one irradiation area (IA) in a respective build material layer (3) and the at least one second sub-area (SA2) is built by or comprises a non-border region of the irradiation area (IA) with respect to the non-consolidated build material area at least partially adjacent to the at least one irradiation area (IA) in the respective build material layer (3).

6. Method according to any of the preceding Claims, **wherein** the at least one irradiation area (IA) comprises at least two irradiation area segments (IAS1 - IAS8) which are separately irradiatable or irradiated with at least one energy beam (5), whereby each irradiation area segment (IAS1 - IAS8) comprises at least one first sub-area (SA1) having a first heat conductance capability and at least one second sub-area (SA2) having a second heat conductance capability higher than the first heat conductance capability, whereby the or at least one first sub-area (SA1) of a respective irradiation area segment (IAS1 - IAS8) are irradiated before at least one respective second sub-area (SA2) of the respective irradiation area segment (IAS1 - IAS8).

7. Method according to any of the preceding Claims, **wherein** the at least one first sub-area (SA1) or a respective irradiation area segment (IAS1 - IAS8) surrounds the at least one second sub-area (SA2) a respective irradiation area segment (IAS1 - IAS8).

8. Method according to any of the preceding Claims, **wherein** the at least one irradiation area (IA) is irradiated on basis of an irradiation pattern (IP) comprising a plurality of irradiation vectors (IV), whereby at least one pattern parameter, in particular the orientation of at least one irradiation vector (IV), of the irradiation pattern (IP) of a at least one irradiation area (IA) of a first build material layer (3) which is to be selectively irradiated and consolidated is changed with respect to at least one pattern parameter of at least one second irradiation pattern (IP) of a second build material layer (3) which is to be selectively irradiated and consolidated.

9. Method according to Claim 8, **wherein** the irradiation pattern (IP) is a stripe-pattern, a chessboard-pattern, or an island-pattern.

10. Control unit (7) for an apparatus (1) for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), whereby
the at least one irradiation area (IA) comprises at least one first sub-area (SA1) having a first heat conductance capability defined by its orientation and/or position relative to non-consolidated build material areas adjacent to the irradiation area (IA) and at least one second sub-area (SA2) having a second heat conductance capability defined by its orientation and/or position relative to non-consolidated build material areas adjacent to the irradiation area (IA) higher than the first heat conductance capability defined by its orientation and/or position relative to non-consolidated build material areas adjacent to the irradiation area (IA) of the first sub-area (SA1), **characterized in that** the control unit (7) is configured to control the successive layerwise selective irradiation and consolidation of respective irradiation areas (IA) in accordance with the method according to any of the preceding Claims.

11. Apparatus (1) for additively manufacturing at least one three-dimensional object (2) by means of successive layerwise selective irradiation and consolidation of build material layers (3), whereby each build material layer (3) comprises at least one irradiation area (IA) which is to be irradiated and consolidated by means of at least one energy beam (5), the apparatus (1) comprising a control unit (7) according to Claim 10.

## Patentansprüche

1. Verfahren zur additiven Herstellung von mindestens einem dreidimensionalen Objekt (2) durch sukzessive schichtweise selektive Bestrahlung und Konsolidierung von Baustoffschichten (3), wobei
jede Baustoffschicht (3), die selektiv bestrahlt und konsolidiert wird, umfasst mindestens einen Bestrahlungsbereich (IA), der durch mindestens einen Energiestrahl (5) bestrahlt und konsolidiert wird, wobei
das Bestrahlungsgebiet (IA) umfasst mindestens ein erstes Unterzone (SA1) mit einer ersten Wärmeleitfähigkeit, die durch seine Ausrichtung und/oder Position im Verhältnis zu nicht konsolidierten Baumaterialbereichen neben dem Bestrahlungsbereich (IA) und mindestens einem zweiten Teilbereich (SA2) mit einer zweiten Wärmeleitfähigkeit größer ist als die erste Wärmeleitfähigkeit des ersten Teilbereichs (SA1), definiert durch seine Ausrichtung und/oder Position im Verhältnis zu nicht konsolidierten Baumaterialbereichen neben dem Bestrahlungsbereich (IA), wobei für mindestens eine Bestrahlungsfläche von mindestens einer Baustoffschicht (3), die selektiv bestrahlt und konsolidiert werden soll, wird vor einem entsprechenden zweiten Teilbereich (SA2) ein entsprechender erster Teilbereich (SA1) bestrahlt, **dadurch gekennzeichnet, dass**
das mindestens ein Bestrahlungsgebiet (IA) wird auf der Grundlage eines Bestrahlungsmusters (IP) bestrahlt, das eine Vielzahl von Bestrahlungsvektoren (IV) umfasst, wobei für einen Bestrahlungsvektor (IV), der mindestens einen Abschnitt umfasst, der sich in einem entsprechenden ersten Unterzone (SA1) und mindestens einem Abschnitt (IV2) erstreckt, der sich in einem zweiten Unterzone (SA2) erstreckt, der sich in der zweiten Unterzone (SA2) erstreckt.

2. Verfahren nach Anspruch 1, **wobei** die thermische Energieeintragung in den mindestens einen Bestrahlungsbereich (IA) durch den mindestens einen Energiestrahl (5) von dem mindestens einem ersten Teilbereich (SA1) auf das mindestens eine zweite Unterzone (SA2) gerichtet ist, insbesondere so, dass die thermische Energieeintragung in den mindestens einen Bestrahlungsbereich (IA) von mindestens einem ersten Unterzone (SA1) in Richtung Zentrum (C) oder einem Mittelpunktbereich des mindestens einen Bestrahlungsbereichs (IA) gerichtet ist.

3. Verfahren nach Anspruch 1 oder 2, **wobei** sich die mindestens eine erste Teilfläche (SA1) zumindest teilweise, besonders vollständig über einem nicht bestrahlten und nicht konsolidierten Bestrahlungsbereich einer vorhergehenden Baustoffschicht (3) befindet und/oder die mindestens ein zweites Unterzone (SA2) zumindest teilweise, besonders vollständig über einer bestrahlten und konsolidierten Baumaterialfläche einer vorhergehenden Baustoffschicht (3) liegt.

4. Verfahren nach Anspruch 3, **wobei** die mindestens eine erste Unterzone (SA1) einen Überhangbereich des dreidimensionalen Objekts (2) aufweist oder umfasst, der additiv herzustellen ist.

5. Verfahren nach einem der vorhergehenden Ansprüche, **wobei** die mindestens eine erste Teilfläche (SA1) durch einen Grenzbereich des mindestens einen Bestrahlungsbereichs (IA) in Bezug auf einen nicht konsolidierten Baumaterialbereich (IA) zumindest teilweise an den mindestens einem Bestrahlungsbereich (IA) in einer jeweiligen Baustoffschicht (3) benachbart ist und der mindestens ein zweites Unterzone (SA2) durch einen nicht grenzüberschreitenden Bereich der Bestrahlungsfläche (IA) in Bezug auf den nicht konsolidierten Baustoffbereich (IA) zumindest teilweise an die mindestens eine Bestrahlungsfläche (IA) in der jeweiligen Bauschicht angrenzend ist oder umfasst.

6. Verfahren nach einem der vorhergehenden Ansprüche, **wobei** die mindestens eine Bestrahlungsfläche (IA) mindestens zwei Bestrahlungsbereichssegmente (IAS1 - IAS8) umfasst, die mit mindestens einem Energiestrahl getrennt bestrahlbar oder bestrahlt sind (5), wobei
jedes Bestrahlungsgebietssegment (IAS1 - IAS8) umfasst mindestens ein erstes Unterzone (SA1) mit einer ersten Wärmeleitfähigkeit und mindestens ein zweites Unterzone (SA2) mit einer zweiten Wärmeleitfähigkeit höher als die erste Wärmeleitfähigkeit, wobei die oder zumindest ein erster Teilbereich (SA1) eines jeweiligen Bestrahlungsgebietssegments (IAS1 - IAS8) vor mindestens einem jeweiligen zweiten Unterzone (SA2) des jeweiligen Bestrahlungsgebietssegments (IAS1 - IAS8) bestrahlt wird.

7. Verfahren nach einem der vorhergehenden Ansprüche, **wobei** das mindestens eine erste Teilgebiet (SA1) oder ein jeweiliges Bestrahlungsgebietssegment (IAS1 - IAS8) das mindestens eine zweite Teilgebiet (SA2) ein jeweiliges Bestrahlungsgebietssegment (IAS1 - IAS8) umgibt.

8. Verfahren nach einem der vorhergehenden Ansprüche, **wobei** die mindestens eine Bestrahlungsfläche (IA) auf der Grundlage eines Bestrahlungsmusters (IP) bestrahlt wird, das eine Vielzahl von Bestrahlungsvektoren (IV) umfasst, wobei mindestens ein Musterparameter, insbesondere die Ausrichtung von mindestens einem Bestrahlungsvektor (IV), des Bestrahlungsmusters (IP) eines mindestens einer Bestrahlungsfläche (IA) einer ersten Build-Materialschicht (3), die selektiv bestrahlt und konsolidiert wird, in Bezug auf mindestens eine Bestrahlungsfläche (IA) geändert wird. Musterparameter von mindestens einem Sekunde Bestrahlungsmuster (IP) einer zweiten Baustoffschicht (3), die selektiv bestrahlt und konsolidiert werden soll.

9. Verfahren nach Anspruch 8, **wobei** das Bestrahlungsmuster (IP) ein Streifenmuster, ein Schachbrettmuster oder ein Inselmuster ist.

10. Steuereinheit (7) für eine Vorrichtung (1) zur additiven Herstellung von mindestens einem dreidimensionalen Objekt (2) durch sukzessive schichtweise selektive Bestrahlung und Konsolidierung von Baustoffschichten (3), wobei jede Baustoffschicht (3) mindestens einen Bestrahlungsbereich (IA) umfasst, der mit mindestens einem Energiestrahl (5) bestrahlt und konsolidiert werden soll, wobei
das mindestens ein Bestrahlungsgebiet (IA) umfasst mindestens ein erstes Unterzone (SA1) mit einer ersten Wärmeleitfähigkeit, die durch seine Ausrichtung und/oder Position im Verhältnis zu nicht konsolidierten Baumaterialbereichen neben dem Bestrahlungsbereich (IA) und mindestens einem zweiten Teilbereich (SA2) mit einer zweiten Wärmeleitfähigkeit definiert ist, die durch seine Ausrichtung und/oder Position in Bezug auf nicht konsolidierte Baumaterialbereiche definiert ist, die an den Bestrahlungsbereich (IA) angrenzen, das höher ist als die erste Wärmeleitfähigkeit, die durch seine Ausrichtung und/oder Position definiert ist. bezogen auf nicht konsolidierte Baumaterialbereiche, die an die Bestrahlungsfläche (IA) der ersten Unterzone (SA1) angrenzen, **dadurch gekennzeichnet, dass**
die Steuereinheit (7) ist so konfiguriert, dass die sukzessive schichtweise selektive Bestrahlung und Konsolidierung der jeweiligen Bestrahlungsbereiche (IA) nach dem Verfahren nach einem der vorhergehenden Ansprüche gesteuert wird.

11. Vorrichtung (1) zur additiven Herstellung von mindestens einem dreidimensionalen Objekt (2) durch sukzessive schichtweise selektive Bestrahlung und Konsolidierung von Baustoffschichten (3), wobei jede Baustoffschicht (3) mindestens einen Bestrahlungsbereich (IA) umfasst, der mit mindestens einem Energiestrahl (5) bestrahlt und konsolidiert werden soll, die Vorrichtung (1), die eine Steuereinheit (7) nach Anspruch 10 umfasst.

## Revendications

1. Méthode de fabrication additive d'au moins un objet tridimensionnel (2) au moyen d'une irradiation sélective successive par couche et d'une consolidation des couches de matériaux de construction (3), par laquelle
chaque couche de matériau de construction (3) qui est sélectivement irradiée et consolidée comprend au moins une zone d'irradiation (IA) irradiée et consolidée au moyen d'au moins un faisceau d'énergie (5), dans laquelle
la zone d'irradiation (IA) comprend au moins une première sous-zone (SA1) ayant une première capacité de conductance thermique définie par son orientation et/ou sa position par rapport aux zones de matériaux de construction non consolidées adjacentes à la zone d'irradiation (IA) et au moins une seconde sous-zone (SA2) ayant une deuxième capacité de conductance thermique supérieure à la première capacité de conductance thermique de la première sous-zone (SA1) définie par son orientation et/ou sa position par rapport aux zones de matériaux de construction non consolidées adjacentes à la zone d'irradiation (IA), selon laquelle
pour au moins une zone d'irradiation d'au moins une couche de matériaux de construction (3) qui doit être irradiée sélectivement et consolidée, une première sous-zone (SA1) respective est irradiée avant une deuxième sous-zone (SA2) respective, **caractérisée par**:
au moins une zone d'irradiation (IA) est irradiée sur la base d'un schéma d'irradiation (IP) comprenant une pluralité de vecteurs d'irradiation (IV), dans le cas d'un vecteur d'irradiation (IV) qui comprend au moins une section s'étendant dans une première sous-zone (SA1) et au moins une section (IV2) s'étendant dans une deuxième sous-zone (SA2), au moins une section (IV) qui s'étend dans la première sous-zone (SA1) est traitée et irradiée avant la section au moins (IV2) qui s'étend dans la deuxième sous-zone (SA2).

2. Méthode selon la revendication 1, dans **laquelle** l'apport d'énergie thermique dans au moins une zone d'irradiation (IA) par au moins un faisceau d'énergie (5) est dirigé à partir d'au moins une première sous-zone (SA1) vers la sous-zone d'au moins une seconde (SA2), en particulier de telle sorte que l'apport d'énergie thermique dans au moins une zone d'irradiation (IA) soit dirigé à partir d'au moins une première sous-zone (SA1) vers le centre (C) ou une région centrale d'au moins une zone d'irradiation (IA).

3. Méthode selon la revendication 1 ou 2, **dans laquelle** au moins une première sous-zone (SA1) est au moins partiellement, en particulier complètement, située au-dessus d'une zone d'irradiation non irradiée et non consolidée d'une couche de matériaux de construction précédente (3) et/ou la sous-zone d'au moins une seconde (SA2) est au moins partiellement, en particulier complètement, située au-dessus d'une zone de matériaux de construction irradiée et consolidée d'une couche de matériaux de construction précédente (3).

4. Méthode selon la revendication 3, **dans laquelle** au moins une première sous-zone (SA1) est ou comprend une région de surplomb de l'objet tridimensionnel (2) qui doit être fabriqué de manière additive.

5. Méthode selon l'une des revendications précédentes, **dans laquelle** au moins une première sous-zone (SA1) est construite par ou comprend une région frontalière d'au moins une zone d'irradiation (IA) en ce qui concerne une zone de matériaux de construction non consolidée au moins partiellement adjacente à au moins une zone d'irradiation (IA) dans une couche de matériaux de construction respective (3) et au moins une seconde sous-zone (SA2) est construite par ou comprend une région non frontalière de la zone d'irradiation (IA) en ce qui concerne la zone de matériaux de construction non consolidée au moins partiellement adjacente à au moins une zone d'irradiation (IA) dans la couche de matériaux de construction concernée (3).

6. Méthode selon l'une des revendications précédentes, **dans laquelle** au moins une zone d'irradiation (IA) comprend au moins deux segments de zone d'irradiation (IAS1 - IAS8) qui sont séparément irradiables ou irradiés avec au moins un faisceau d'énergie (5),
chaque segment de zone d'irradiation (IAS1 - IAS8) comprend au moins une première sous-zone (SA1) ayant une première capacité de conductance thermique et au moins une seconde sous-zone (SA2) ayant une deuxième capacité de conductance thermique supérieure à la première capacité de conductance thermique, la ou au moins une première sous-zone (SA1) d'un segment de zone d'irradiation respectif (IAS1 - IAS8) étant irradiée avant au moins une seconde sous-zone (SA2) respective du segment de la zone d'irradiation respective (IAS1 - IAS8).

7. Méthode selon l'une des revendications précédentes, **dans laquelle** au moins une première sous-zone (SA1) ou un segment de zone d'irradiation respectif (IAS1 - IAS8) entoure au moins une seconde sous-zone (SA2) un segment de zone d'irradiation respectif (IAS1 - IAS8).

8. Méthode selon l'une des revendications précédentes, **dans laquelle** au moins une zone d'irradiation (IA) est irradiée sur la base d'un motif d'irradiation (IP) comprenant une pluralité de vecteurs d'irradiation (IV), par lequel au moins un paramètre de motif, en particulier l'orientation d'au moins un vecteur d'irradiation (IV), du modèle d'irradiation (IP) d'au moins une zone d'irradiation (IA) d'une première couche de matériau de construction (3) qui doit être irradié sélectivement et consolidé est modifié par rapport à au moins un modèle paramètre d'au moins un second motif d'irradiation (IP) d'une deuxième couche de matériau de construction (3) qui doit être irradié de manière sélective et consolidé.

9. Méthode selon la revendication 8, **dans laquelle** le motif d'irradiation (IP) est un motif rayé, un motif d'échiquier ou un motif d'île.

10. Unité de commande (7) pour un appareil (1) pour la fabrication additive d'au moins un objet tridimensionnel (2) au moyen d'irradiations sélectives successives par couche et de consolidation de couches de matériaux de construction (3), chaque couche de matériau de construction (3) comprenant au moins une zone d'irradiation (IA) qui doit être irradiée et consolidée au moyen d'au moins un faisceau d'énergie (5),
au moins une zone d'irradiation (IA) comprend au moins une première sous-zone (SA1) ayant une première capacité de conductance thermique définie par son orientation et/ou sa position par rapport aux zones de matériaux de construction non consolidées adjacentes à la zone d'irradiation (IA) et au moins une seconde sous-zone (SA2) ayant une deuxième capacité de conductance thermique définie par son orientation et/ou sa position par rapport aux zones de matériaux de construction non consolidées adjacentes à la zone d'irradiation (IA) supérieures à la première capacité de conductance thermique définie par son orientation et/ou sa position par rapport aux zones de matériaux de construction non consolidées adjacentes à la zone d'irradiation (IA) de la première sous-zone (SA1), **caractérisée** en
L'unité de contrôle (7) est configurée pour contrôler l'irradiation sélective successive par couche et la consolidation des zones d'irradiation respectives (IA) conformément à la méthode selon l'une des revendications précédentes.

11. Appareils (1) pour la fabrication additive d'au moins un objet tridimensionnel (2) au moyen d'irradiations sélectives successives et de consolidation de couches de matériaux de construction (3), chaque couche de matériau de construction (3) comprenant au moins une zone d'irradiation (IA) qui doit être irradiée et consolidée au moyen d'au moins un faisceau d'énergie (5), l'appareil (1) comprenant une unité de commande (7) conformément à la revendication 10.
